# EUROPÄISCHE PATENTANMELDUNG

(11) **EP 0 717 260 A2**
(43) Veröffentlichungstag der Anmeldung: **19.06.1996**
(21) Anmeldenummer: 95119743.3
(22) Anmeldetag: 14.12.1995
(51) Int. Cl.: F42B 33/06, F23G 7/00

(54) **Verfahren zur Aufarbeitung von pyrotechnischem Material**

(30) Priorität: 15.12.1994 DE 4444809
(71) Anmelder: Buck Werke GmbH & Co, D-73337 Bad Überkingen (DE)
(72) Erfinder: Hebisch, Heinz, Dr., D-16278 Angermünde (DE); Vogel, Lothar, Dipl.-Ing. (FH), D-16303 Schwedt (DE); Knaak, Karl-E., Dipl.-Ing., D-16303 Schwedt (DE); Goltz, Norbert, Dipl.-Ing., D-16303 Schwedt (DE); Rothenstein, Uwe, Dipl.-Chem., D-16303 Schwedt (DE); Krzoska, Karl-P., Ing., D-16278 Angermünde (DE)
(74) Vertreter: Spott, Gottfried, Dr.

(57) **Zusammenfassung**

Zur Aufarbeitung von pyrotechnischem Material brennt man dieses pyrotechnische Material in einem ersten Reaktor ab und läßt es ausschwelen, trägt die bei der Verbrennung entstehende Schlacke aus und leitet das bei der Verbrennung entstehende Rohgas in einen Feststoffabscheider, um feste Bestandteile abzutrennen, leitet das von festen Bestandteilen befreite Rohgas in einen zweiten Reaktor, in dem es auf eine Temperatur von mehr als 800°C erhitzt wird, leitet anschließend das Rohgas in mindestens eine Waschvorrichtung zur Naßwäsche, beaufschlagt das gewaschene Rohgas mit einem Additiv, das aus einer Kalk-Kohle-Mischung besteht, leitet dieses Rohgas anschließend durch eine Filtereinheit und entläßt das so gereinigte Gas dann als Abluft.

## Beschreibung

Die Erfindung betrifft ein Verfahren zur Aufarbeitung von pyrotechnischem Material.

Pyrotechnisches Material, wie Munition, Leuchtkörper, Leuchtsignalmunition, Treibladungen und Wurfkörper, das wegen Ablauf der Lagerfähigkeit nicht mehr einsatzfähig ist, muß vernichtet und entsorgt werden. Da eine gefahrlose mechanische Auftrennung in die einzelnen Komponenten in der Regel nicht möglich ist oder nur mit unverhältnismäßig hohem Aufwand erfolgen könnte, wird dieses Material verbrannt. Die dabei entstehende Schlacke kann problemlos entsorgt werden. Das entstehende Rauchgas enthält, abhängig von dem verbrannten Material, feste oder gasförmige Stoffe, beispielsweise Metalloxide, wie Magnesiumoxid, Natriumoxid und Aluminiumoxid, Halogene, Stickoxide und Kohlenoxide, die aus dem Gas zumindest überwiegend entfernt werden müssen, bevor dieses in die Atmosphäre entlassen werden kann.

Ein Verfahren und eine Vorrichtung zu einer derartigen Aufarbeitung von pyrotechnischem Material ist beispielsweise aus DE 42 21 343 A1 bekannt, wobei das pyrotechnische Material kontrolliert abgebrannt wird, die Schlacke gegebenenfalls nachreagieren gelassen wird und das entstehende Rohgas durch einen Hochtemperaturbereich geleitet wird, in welchem es über einen vorbestimmten Zeitraum einer Temperatur von mindestens 1200°C ausgesetzt wird, um noch vorhandene organische Stoffe zu zersetzen. Das bei dieser Verbrennung entstehende Rohgas wird dann auf eine Temperatur unter 400°C abgekühlt und zuerst trocken gereinigt, indem es zuerst in einen Vorabscheider geführt wird, wobei große Partikel abgeschieden werden, und dann über Feinstaubfilter geführt wird, um feinteilige Feststoffe abzuscheiden. Falls notwendig, kann das Rohgas anschließend naß gereinigt werden, indem es zuerst durch einen Rotationswäscher und dann über mehrere Absorptionsseinheiten geleitet wird. Das auf diese Weise gereinigte Gas kann dann in die Atmosphäre entlassen werden. Eine Abwandlung dieses Verfahrens wird in DE 42 21 344 C1 beschrieben. Hier wird pyrotechnisches Material in zwei Reaktoren verbrannt, wobei in dem einen Reaktionsbehälter Material aufgearbeitet wird, bei dem überwiegend alkalische Reaktionsprodukte entstehen, während in dem anderen Reaktionsbehälter überwiegend saure Reaktionsprodukte entstehen. Bei der Vereinigung der entstandenen Rohgase bilden sich dann entsprechend Salze, die leicht in Vorabscheidern und Feinstaubfiltern abgeschieden werden können. Auch bei dieser Verfahrensabwandlung kann das Rohgas anschließend noch naß gereinigt werden.

Aus DE 40 39 962 A1 ist ein Verfahren zur Vernichtung von chlorhaltigen Stoffen bekannt. Bei diesem Verfahren werden chlorhaltige Stoffe in einem geschlossenen System verbrannt, die entstehenden Verbrennungsprodukte werden einer Nachverbrennung bei mehr als 1.000°C unterzogen und anschließend in eine Kühl- und Vorabsorptionskolonne und danach in mehrere Hauptsabsorber geleitet. Die gekühlte und gereinigte Abluft wird in einen Wasserstrahlinjektor geführt und im Kreislauf in die Verbrennungskammer zurückgeleitet. Es wird in DE 40 39 962 A1 vorgeschlagen, als Waschmedium Kalkmilch zu verwenden.

Die bekannten Verfahren führen zu sehr befriedigenden Ergebnissen. Schwierigkeiten bereitet jedoch die Aufarbeitung von pyrotechnischem Material, das hohe Anteile an Schwelstoffen und Aerosolen sowie Stickoxiden entwickelt. In diese Klasse gehören Materialien, wie Farbrauche, Nebelkörper und Tränengaskörper. Beim Abbrennen dieser Materialien entstehen so hohe Anteile an Schwebstoffen, daß mit den bisher bekannten Verfahren eine ausreichende Abtrennung der Schadstoffe nur sehr schwierig zu erzielen war. Weiterhin ist die Reaktionszeit dieser Materialien sehr lang, so daß jede Charge sehr lange im Reaktor verweilen muß.

Es war daher Aufgabe der Erfindung, die aus DE 42 21 343 C1, DE 42 21 344 C1 und DE 40 39 962 A1 bekannten Verfahren weiter zu verbessern, und insbesondere ein Verfahren zur Verfügung zu stellen, mit dem auch schwer zu verarbeitende Stoffe in befriedigender Weise aufgearbeitet werden können.

Diese Aufgabe wird gelöst mit einem Verfahren zur Aufarbeitung von pyrotechnischem Material, bei dem man
I. das pyrotechnische Material in einem ersten Reaktor abbrennt und ausschwelen läßt,
II. die bei der Verbrennung entstehende Schlacke austrägt und das bei der Verbrennung entstehende Rohgas in einen Feststoffabscheider leitet, um feste Bestandteile abzutrennen,
III. das von festen Bestandteilen befreite Rohgas in einen zweiten Reaktor leitet, in welchem es auf eine Temperatur von mehr als 800°C erhitzt wird,
IV. das erhitzte Rohgas anschließend in mindestens eine Waschvorrichtung zur Naßwäsche leitet,
V. das gewaschene Rohgas mit einem Additiv, das aus einer Kalk-Kohle-Mischung besteht, beaufschlagt und anschließend durch eine Filtereinheit leitet und
VI. das so gereinigte Reingas als Abluft entläßt.

Mit dem erfindungsgemäßen Verfahren gelingt es, pyrotechnische Materialien, die einen hohen Anteil an Schwebstoffen erzeugen, so aufzuarbeiten, daß nach Durchlaufen des Verfahrens feste Bestandteile, die gegebenenfalls weiter verwendet oder entsorgt werden können und ein Reingas, das wegen des geringen Anteils an Emissionen problemlos in die Abluft entlassen werden kann, erhalten werden.

In der Stufe I. des erfindungsgemäßen Verfahrens wird das pyrotechnische Material, bevorzugt Farbrauche, Nebelkörper, Tränengaskörper oder phosphorhaltige Munition, in einem ersten Reaktor abgebrannt und ausschwelen gelassen. Als Reaktor kann jeder Reaktor verwendet werden, der den entstehenden aggressiven Stoffen widerstehen kann. Geeignet ist beispielsweise ein Drehrohrofen oder ein Reaktor mit Ausmauerung. Das Material verbleibt so lange in diesem ersten Reaktor, bis es vollständig ausgeschwelt ist, was in der Regel einen Zeitraum von 0,05 bis 0,5 Stunden beansprucht. Anschließend wird die dabei entstandene Schlacke, die im wesentlichen aus reststofffreien ausgebrannten Hülsen besteht, trocken ausgeschleust und entweder einer Wiederverwendung zugeführt oder entsorgt. Das Abbrennen des pyrotechnischen Materials in dem ersten Reaktor erfolgt bei Temperaturen, die ausreichen, um die Schwelreaktion in Gang zu halten. Bevorzugt wird eine Temperatur im Bereich von 250 bis 800°C, besonders bevorzugt im Bereich von 350 bis 650°C, angewendet.

Bei der Verbrennung der erfindungsgemäß bearbeiteten pyrotechnischen Materialien entstehen feste und gasförmige Schadstoffe wie PbO₂, PbCl₂, Al₂O₃, AlCl₃, CaO, HCl, SO₂, SO₃, Stickoxide, Dioxine und Furane. Die festen Bestandteile können in der zweiten Stufe abgetrennt werden, während für die gasförmigen Komponenten eine Aufarbeitung in Form einer Naßreinigung erforderlich ist.

Daher wird das nach dem Ausschwelen entstehende Rohgas in der Stufe II. zuerst in einen Feststoffabscheider geführt, um feste Bestandteile abzutrennen. Der Feststoffabscheider kann eine an sich bekannte Vorrichtung sein, die zur Abtrennung von festen Bestandteilen geeignet ist, zum Beispiel eine Grobfiltervorrichtung. Die abgetrennten Feststoffe können kontinuierlich oder diskontinuierlich abgezogen und entsorgt werden.

Das von festen Bestandteilen befreite Rohgas wird in Stufe III. dann in einen zweiten Reaktor geleitet, in welchem es auf eine Temperatur von mehr als 800°C, bevorzugt auf eine Temperatur im Bereich von 900 bis 2000°C, erhitzt wird. Diese Behandlung bei hohen Temperaturen dient dazu, eventuell noch vorhandene organische Stoffe zu zersetzen. Die Hochtemperaturbehandlung wird über einen solchen Zeitraum durchgeführt, daß alle organischen Stoffe zersetzt werden. Dies ist in der Regel nach 5 bis 10 Sekunden der Fall.

Der in dieser Stufe III. verwendete Reaktor kann jeder Reaktor sein, der auf Temperaturen von 2000°C oder mehr erhitzt werden kann, wobei das Innere des Reaktors so ausgebildet ist, daß es mit den aggressiven Bestandteilen des Rohgases nicht reagiert. Bevorzugt wird ein Reaktor mit einer Ausmauerung verwendet. Dieser Reaktor stellt einen geschlossenen druckfesten Raum dar, der innen mit einem feuerfestem Material ausgekleidet ist, und ist vorzugsweise ein Muldenreaktor oder Drehrohrofen. Bevorzugt wird auch in dem zweiten Reaktor pyrotechnisches Material verbrannt, das jedoch eine andere Zusammensetzung aufweist. Die jeweils entstehenden Rohgase werden dann in der Hochtemperaturzone dieses zweiten Reaktors zusammengeführt und gemeinsam weiter aufgereinigt.

Nach der Hochtemperaturbehandlung gemäß Stufe III. wird das Rohgas in der Stufe IV. sofort durch mindestens eine Waschvorrichtung zur Naßwäsche des Gases geleitet, wobei die Temperatur des Rohgases auf unter 100°C abgekühlt wird. Bevorzugt erfolgt diese Abkühlung schlagartig, um das Entstehen von Furanen und Dioxinen zu verhindern.

Vorrichtungen zur Naßwäsche von Gas sind an sich bekannt. Bevorzugt wird zur Naßwäsche das Rohgas zuerst durch eine Venturieinheit geführt, um das Gas so weit abzukühlen, daß seine Temperatur unterhalb des Siedepunktes von Wasser liegt. Besonders bevorzugt wird das Gas schlagartig auf eine Temperatur im Bereich von 60 bis 90°C abgekühlt. Als Waschvorrichtung wird bevorzugt ein Rotationswäscher verwendet. Da die im Gas noch enthaltenen Schadstoffe überwiegend sauer sind, wird für die Gaswäsche bevorzugt eine alkalisch eingestellte Waschflüssigkeit verwendet. Der pH-Bereich dieser Waschflüssigkeit wird durch Zugabe einer Base, insbesondere von verdünnter Natronlauge, vorzugsweise in einem Bereich von 7 bis 10 gehalten. Die Waschwassermenge liegt bevorzugt in einem Bereich von 0,005 bis 0,015 m³/Nm³ Trockengas.

Gegebenenfalls wird der ersten Waschvorrichtung eine zweite Waschvorrichtung nachgeschaltet. Bevorzugt kann als zweite Waschvorrichtung beispielsweise mindestens eine Absorptionseinheit verwendet werden. Je nach Beladung des Gases können Füllkörperkolonnen oder Bodenkolonnen mit geeigneten Waschflüssigkeiten ausgewählt werden.

Das nach Durchlaufen der Waschvorrichtung(en) erhaltene Gas weist in der Regel immer noch einen so hohen Anteil an sauren und stickstoffhaltigen Schadstoffen auf, daß es nicht als Abluft entlassen werden kann.

In einer weiteren Stufe, nämlich der Stufe V., wird dieses Gas daher mit einem Gemisch aus Kalk und Kohle beaufschlagt. Das Kalk-Kohle-Gemisch bindet saure Bestandteile und adsorbiert noch verbliebene organische Bestandteile, insbesondere Dioxine, Furane und Aerosole. Das mit den Schadstoffen beladene Kalk-Kohle-Gemisch wird anschließend in einer Filtereinheit wieder abgetrennt und kann dann in der Stufe I., II. wieder eingesetzt bzw. über Deponie entsorgt werden.

Die in der Stufe V. verwendete Kalk-Kohle-Mischung kann abhängig von der Zusammensetzung des Rohgases ausgewählt werden und umfaßt bevorzugt 50 bis 100 % Kalk und 0 bis 50 % Kohle. Bei einem Rohgas, das einen hohen Anteil an sauren Schadstoffen und einen geringeren Anteil an organischen Schadstoffen enthält, kann der Kalkanteil im höheren Bereich liegen, während bei einem Rohgas mit einem hohen Anteil an organischen Schadstoffen der Kohleanteil an der oberen Grenze sein sollte. Die Kalk-Kohle-Mischung wird dem Gas in solcher Menge zugesetzt, daß im wesentlichen alle Schadstoffe aufgenommen werden können. Als geeignet hat sich eine Menge im Bereich vom 0,1 bis 10 g/Nm³ Trockengas erwiesen.

Falls das mit der Kalk-Kohle-Mischung behandelte und anschließend filtrierte Gas noch gasförmige Stickstoffverbindungen aufweist, wird es anschließend in eine Entstickungseinheit geleitet und dort von den stickstoffhaltigen Verbindungen befreit. Das aus der Entstickungseinheit austretende Gas ist in jedem Fall so rein, daß es in der Stufe VI. in die Abluft entlassen werden kann.

In einer bevorzugten Ausführungsform des erfindungsgemäßen Verfahrens wird das Wasser der Waschvorrichtung(en) in einem geschlossenen Waschwasserkreislaufsystem geführt, so daß kein Abwasser entsteht, das entsorgt werden muß. Hierzu wird das Waschwasser aus der Waschvorrichtung zuerst in einem Auffangbecken aufgefangen. Das in dem Auffangbecken gesammelte Waschwasser wird diskontinuierlich ausgeschleust und in einem Vorlagebecken gesammelt. Aus dem Vorlagebecken wird es zuerst einer Filterpresse zugeführt, um die festen Bestandteile abzuscheiden und anschließend zur Absenkung des Salzgehaltes einem Verdampfer zugeführt. Das im Verdampfer anfallende Destillat, Brüden sowie das Filtrat aus der Filterpresse und das zwischenspeicherbare Leckage-, Spül- und Regenwasser aus dem Anlagenbereich werden dann als Frischwasserersatz wieder in die Waschvorrichtung zurückgeführt. Die in der Filterpresse und im Verdampfer erhaltenen Feststoffe können problemlos entsorgt werden. Auf diese Weise wird ein geschlossenes System gebildet, bei dem kein Abwasser nach außen abgeführt werden muß.

Besonders bevorzugt kann für die Hochtemperaturstufe III. und die Naßwäsche IV. des Gases die aus DE-A 42 21 343 und DE-A 42 21 344 bekannte Anlage verwendet werden. Dieser Anlage wird dann für das erfindungsgemäße Verfahren ein erster Reaktor mit anschließender Filtereinheit vorgeschaltet und eine Vorrichtung zur Additivbeaufschlagung mit einer Filtereinheit und gegebenenfalls eine Entstickungsvorrichtung nachgeschaltet.

Das erfindungsgemäße Verfahren wird bevorzugt in einer Vorrichtung zur Aufarbeitung von pyrotechnischem Material durchgeführt, die einen ersten Reaktor 1, einen Feststoffabscheider 7, einen zweiten Reaktor 11, eine Waschvorrichtung zur Naßwäsche des Rohgases 15, eine Additivzugabevorrichtung 22 und eine Filtereinheit 24 umfaßt.

In einer bevorzugten Ausführungsform schließt sich an die Additivzugabevorrichtung 22 und die Filtereinheit 24 noch eine Entstickungsvorrichtung 29 an.

Weiterhin wird bei einer besonders bevorzugten Vorrichtung das Wasser der Naßwäschevorrichtungen in einem geschlossenen Kreislauf geführt. Hierzu weist die erfindungsgemäße Vorrichtung Auffangbecken 32, 34 zur Aufnahme von verbrauchter Waschflüssigkeit, ein Vorlagebecken 36 zum Sammeln des verbrauchten Wassers, eine Filterpresse 38 zur Abscheidung von festen Bestandteilen aus dem verbrauchten Wasser, einen Verdampfer 41 zur Rückgewinnung von Wasser und einen Trockner 39 zum Trocknen der festen Bestandteile aus dem verbrauchten Wasser auf.

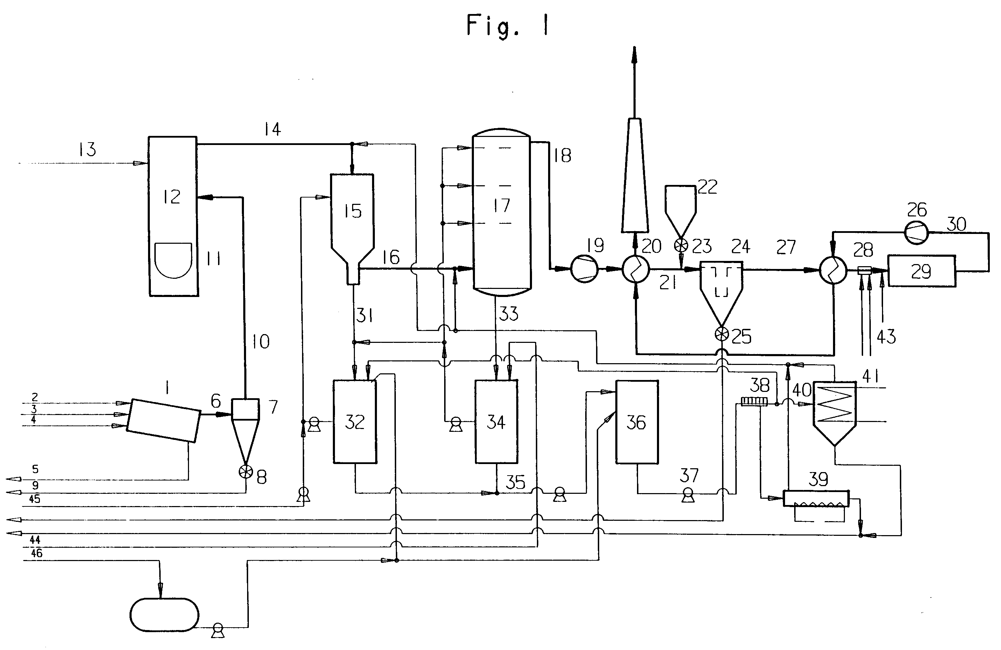

Das erfindungsgemäße Verfahren und eine geeignete Vorrichtung werden nun anhand der Figur 1 näher erläutert.

Figur 1 zeigt eine Vorrichtung, die eine Abbrandkammer 1 aufweist. Die Abbrandkammer 1 wird über eine Heizeinrichtung 2 beheizt und über die Leitung 3 mit Frischluft beaufschlagt. Über eine Zuführvorrichtung 4 wird das zu verarbeitende pyrotechnische Material dem Reaktor 1 zugeführt. Die bei der Verbrennung entstehende Schlacke, insbesondere Hülsen, wird über eine Leitung 5 entleert. Das bei der Verbrennung entstehende Rohgas wird über die Leitung 6 in einen Feststoffabscheider 7 geleitet. Die dabei abgeschiedenen Feststoffe werden über die Zellradschleuse 8 und über eine Leitung 9 entnommen. Das von Feststoffen befreite Rohgas wird über die Leitung 10 in einen zweiten Reaktor 11 geleitet, wo es einer Hochtemperaturbehandlung unterzogen wird.

In dem zweiten Reaktor 11 wird gleichzeitig anderes pyrotechnisches Material kontrolliert abgebrannt. Die dabei entstehende Schlacke wird ausgeschleust und kann gegebenenfalls in der Abbrandkammer 1 nachreagieren gelassen werden. Das entstehende Rohgas wird ebenfalls der Hochtemperaturbehandlung unterzogen. Das Rohgas aus der Abbrandkammer und gegebenenfalls das in der Reaktionskammer 11 gebildete Rohgas werden in der Nachbrennzone 12, die durch eine Heizeinrichtung 13 separat beheizt wird, erhitzt.

Nach der Hochtemperaturbehandlung wird das Rohgas über die Leitung 14 in den ersten Wäscher 15 geführt. Nach der ersten Wäsche wird das Rohgas über die Leitung 16 in einen zweiten Wäscher 17 geleitet. Aus dem Wäscher 17 wird das Gas über eine Leitung 18 durch einen Saugzug 19 herausgeleitet und über einen Wärmeaustauscher 20 weitergeleitet. In dem Wärmeaustauscher 20 wird das in den Waschvorrichtungen abgekühlte Gas wieder aufgewärmt, indem es im Gegenstrom zu dem aus der Entstickungsanlage kommenden erwärmten Gas geführt wird. Das erwärmte Gas wird dann durch die Leitung 21 geführt und dort mit einem Kalk-Kohle-Gemisch beaufschlagt, das aus einem Vorratsbehälter 22 über eine Austragsvorrichtung 23 zudosiert wird. Das mit der Kalk-Kohle-Mischung beaufschlagte Gas wird dann durch eine Filtereinrichtung 24 geleitet, in der die Feststoffe von dem Gas wieder abgetrennt werden. Die abgetrennten Feststoffe können über die Austragsvorrichtung 25 von Zeit zu Zeit entnommen werden. Das Gas wird aus der Filtereinheit 24 mittels eines der Entstickungsanlage 29 nachgeschalteten Saugzuges 26 über einen weiteren Wärmeaustauscher 27, in welchem es weiter erwärmt wird, über die Leitung 28 in die Entstickungsanlage 29 geführt. Das die Entstickungsanlage 29 verlassende Gas ist so rein, daß es über die Leitung 30 in die Abluft entlassen werden kann.

Die Waschvorrichtungen der Anlage sind so ausgebildet, daß das Abwasser im Kreislauf geführt wird und dadurch kein Abwasser nach außen dringt. Hierzu ist die erste Waschvorrichtung 15 über die Leitung 31 mit einem ersten Auffangbecken 32 verbunden, während die zweite Waschvorrichtung 17 über eine Leitung 33 mit einem zweiten Auffangbehälter 34 in Verbindung steht. In den Auffangbehältern 32, 34 wird verbrauchtes Waschwasser aus den Waschvorrichtungen 15 und 17 aufgefangen. Von Zeit zu Zeit wird das in den Auffangbehältern 32 und 34 gesammelte Waschwasser über die Leitung 35 in das Vorlagebecken 36 geführt. Aus dem Vorlagebecken 36 wird das Waschwasser zur Abtrennung des Feststoffanteiles über eine Leitung 37 diskontinuierlich in eine Filterpresse 38 geführt. Die in der Filterpresse gewonnenen Feststoffe werden in einem Trockner 39 getrocknet und dann entsorgt. Das aus der Filterpresse austretende Wasser hat noch einen hohen Salzanteil. Dieses Wasser wird daher über die Leitung 40 in den Verdampfer 41 geführt, wo durch Eindampfung das Salz abgetrennt wird. Das Salz kann gewonnen und weiterverwendet werden, während der kondensierte Brüden zusammen mit dem im Trockner gewonnen Wasser über die Leitung 42 wieder in die Waschvorrichtungen 15 und 17 zurückgeführt wird.

Der pH-Wert der Waschlösung in Waschvorrichtung 15 und im Auffangbecken 32 kann eingestellt werden durch Zudosierung einer verdünnten NaOH-Lösung, die über Leitung 45 zudosiert werden kann. Außerdem kann über Leitung 44 geregelt Frischwasser zugeführt werden. Die Waschflüssigkeit in den Waschvorrichtungen 15 und 17 kann außerdem aufgefüllt werden durch das zwischenspeicherbare, im Anlagenbereich anfallende Abwasser über Leitung 46.

Die Erfindung wird an einem Beispiel weiter erläutert.

### Beispiel

In einer erfindungsgemäßen Anlage wurden in der Abbrandkammer 1 Nebelstoffe aufgearbeitet, während in der Reaktionskammer 11 festes Treibmittel verbrannt wurden. Die aufzuarbeitenden pyrotechnischen Materialien hatten die folgende Zusammensetzung:

| **Treibmittel:** | |
|---|---|
| Nitrocellulose | 55 Masseprozent |
| Nitroglycerin | 28 Masseprozent |
| Dinitrotoluol | 11 Masseprozent |
| Zentralit | 3 Masseprozent |
| Trafoöl | 1 Masseprozent |
| Bleioxid | 2 Masseprozent |

| **Nebelstoff:** | |
|---|---|
| Aluminiumgrieß | 30 Masseprozent |
| Aluminiumpulver | 4 Masseprozent |
| Hexachlorcyclohexan | 64 Masseprozent |
| Paraffinöl | 1 Masseprozent |
| Calciumcarbonat | 1 Masseprozent |

Die Temperaturführung der Abbrandprozesse erfolgte unter Berücksichtigung der Reaktionswärme der Einsatzprodukte durch eine geregelte Beheizung mit den vorgesehenen Heizmedien und eine geregelte Zuführung von Verbrennungsluft. Der Reaktionskammer 11 wurde zusätzlich eine definierte, technologisch erforderliche Menge an Kühlluft zugeführt, die zur Außenwandkühlung der Reaktormulde in der Reationskammer 11 sowie als Spülmedium und Fördermedium eingesetzt wurde, um die Ansammlung von explosiblen Gasgemischen im Gasraum unterhalb der Reaktormulde zu verhindern.

Die zugeführte Kühlluftmenge betrug 7 Masseprozent der Gesamtabgasmenge der Nachbrennzone 12. Bei der thermischen Umsetzung der oben angegebenen Einsatzprodukte entstanden als feste und gasförmige Komponenten zum Beispiel PbO₂, PbCl₂, Al₂O₃, AlCl₃, CaO, HCl, SO₂, SO₃, NOₓ, Dioxine und Furane. Zur Schadstoffminimierung wurde für die Abgasreinigung eine angepaßte Auswahl und Kombination von Reinigungsstufen vorgesehen, um die gesetzlich vorgeschriebenen Immissionswerte zu erreichen.

Die Abbrandkammer 1 wurde aus technologischen Gründen zur Verhinderung von Sinterungen und Schmelzprozessen der Rückstände bei einer Temperatur von etwa 430°C betrieben. In der Reaktionskammer 11 lag die Temperatur bei etwa 1050°C. Aus der Abbrandkammer 1 wurden die von Reststoffen freien, ausgebrannten Hülsen trocken ausgeschleust. Das erhaltene staubhaltige Rohgas wurde durch den Anlagenunterdruck zur Vorentstaubung über den Feststoffabscheider 7 geleitet, aus dem der abgeschiedene Feststoff mittels einer Austragsvorrichtung 8 trocken abgezogen wurde. Das vorentstaubte Rohgas aus der Abbrandkammer 1 wurde anschließend in die Reaktionskammer 11 eingespeist und gemeinsam mit dem Rohgas aus der Reaktionskammer 11 zur thermischen Nachbehandlung bei etwa 1200°C mit einer Verweilzeit von 2,8 s lang der Nachbrennzone 12 zugeführt, um einen vollständigen Ausbrand der Rauchgase von organischen Bestandteilen, insbesondere Dioxinen, Furanen und Kohlenoxid, zu gewährleisten. Hierzu war die Nachbrennzone 12 mit einer separaten Brennereinheit 13 versehen, deren Leistung über die Ausgangstemperatur der Nachbrennzone 12 geregelt wurde. Aus dem Boden des schwenkbar und kippbar ausgeführten Muldenreaktors 11 wurden Reststoffe ausgekippt, abgekühlt und entsprechend dem Ausbrenngrad gegebenenfalls in der Abbrandkammer 1 einer thermischen Nachbehandlung unterworfen. Durch die Nachordnung der Nachbrennzone 12 wurde eine thermische Entlastung vorgeschalteter Baueinheiten erreicht und trotzdem ein steuerbarer und sicherer Ausbrand gewährleistet.

Zur Reinigung wurde das Rohgas nach der thermischen Behandlung in der Nachbrennzone 12 über eine Wäschereinheit geführt, die aus einer Waschvorrichtung 15 und einer Nachwaschvorrichtung 17 bestand. In der Waschvorrichtung 15 wurde das Rohgas zur Vermeidung der Rekombination von Dioxinen und Furanen schlagartig von etwa 1150°C auf eine Temperatur von etwa 85°C abgekühlt und in der Waschvorrichtung 15 vorgewaschen, bevor das Rohgas in die Nachwaschvorrichtung 17 geführt wurde. In den Waschvorrichtungen wurde das Rohgas mit einem Wirkungsgrad von etwa 90% von den aufgeführten Schadstoffkomponenten gereinigt.

Nach einem Zwischenkondensatabzug wurde das gesättigte Rohgas im Wärmeaustauscher 19 auf eine Temperatur von etwa 40°C oberhalb der Taupunktstemperatur erwärmt, um Versetzungen durch örtliche Taupunktunterschreitung in nachgeschalteten Reinigungsstufen auszuschließen. Zur Bindung saurer Schadstoffkomponenten im Rohgas sowie zur Anhebung des Entstaubungseffektes wurde dem Rohgasstrom ein Kalk-Kohle-Gemisch zugegeben. Die Zuführung des Kalk-Kohle-Gemisches erfolgte aus einem Vorratsbehälter 22 über eine Abgabeeinrichtung 23. Das verwendete Kalk-Kohle-Gemisch hatte einen Kalkanteil von 90% und wurde in einer Menge von 1 g/Nm³ Trockengas zugegeben. In der Filtereinheit 24 wurde dann das Additiv wieder abgezogen.

Durch Zugabe des Additivs wurde unter anderem Chlorwasserstoff aus dem Einsatzprodukt Nebelstoff und SO₂ am Kalk chemisch gebunden, während Aerosole, wie zum Beispiel Bleichlorid aus dem Treibmittel, durch Agglomeration infolge der geringen Strömungsgeschwindigkeit und der feinen Filterwirkung entfernt wurden und rekombinierte Dioxine sowie Furane an der Kohle adsorbiert wurden. Auf diese Weise wurde die sichere Einhaltung der vorgegebenen Schadstoffkonzentrationswerte garantiert.

Das aus der Filtereinheit 24 austretende entstaubte und von Schadstoffen bereits weitgehend gereinigte Rohgas wurde im Wärmeaustauscher 20 bzw. 27 auf die Temperatur für das Entstickungsverfahren aufgewärmt. Da diese Erwärmung nicht ausreichte, wurde das Gas durch einen Brenner weiter erhitzt. Als Reduktionsmittel wurde in der Entstickungsvorrichtung Ammoniak, der über Leitung 43 zugeführt wurde, verwendet.

Das die Entstickungsvorrichtung verlassende Gas war so rein, daß es als Reingas in die Atmosphäre abgegeben werden konnte. Die Wärme des die Entstickungsvorrichtung verlassenden Gases wurde noch dazu verwendet, in den Wärmeaustauschern 27 und 20 im Gegenstrom das Rohgas anzuwärmen.

Die Waschvorrichtungen 15 und 17 wurden mit separaten Waschwassersystemen ausgeführt. Zur Auswaschung saurer Bestandteile aus dem Rohgasstrom wurde die Waschvorrichtung 15 durch Zudosierung einer verdünnten NaOH-Lösung 45 auf einen pH-Wert von etwa 8 gebracht. Die Waschvorrichtung 15 wurde mit einer Waschwassermenge beaufschlagt, die im Bereich von 0,011 m³/Nm³ Trockengas lag. Aus dem Waschwasserkreislauf der Nachwaschvorrichtung 17, die bei einem pH-Wert von etwa 7 betrieben wurde und der Frischwasser 44 geregelt zugeführt wurde, wurde Waschwasser in den Waschwasserkreislauf der Waschvorrichtung 15 zugefahren. Die Waschwassermengenbeaufschlagung der Nachwaschvorrichtung lag bei 0,005 m³/Nm³ Trockengas.

Durch die Auswaschung saurer Bestandteile sowie der Feststoffe aus dem Rohgasstrom kam es zu einer Aufkonzentration der Salzlast und der Feststoffanteile im Waschwasserkreislauf des Wäschers 15. Bei einer Salzlastkonzentration von etwa 45% des Sättigungswertes, bezogen auf die Waschwassertemperatur, wurde diskontinuierlich aufkonzentriertes Waschwasser ausgeschleust und aus einem Vorlagebecken 36 der weiteren Aufarbeitung der Filterpresse 38 sowie zur Salzgehaltsabsenkung dem Verdampfer 41 zugeführt. Das anfallende Destillat, die Brüden und das Filtrat aus der Filterpresse wurden in die Waschsektion rückgeführt.

Durch die Rückführung von zwischenspeicherbarem, im Anlagenbereich anfallendem Abwasser 46 in das Waschwasserbecken 32 und das Vorlagebecken 36, das gleichzeitig als Absetzbehälter fungierte und das mit einem Überlauf in das Waschwasserbecken 32 der Waschvorrichtung 15 eingebunden wurde, wurde ein geschlossener Waschwasserkreislauf und Abwasserkreislauf geschaffen und eine kostenaufwendige Abwasserbehandlung mit der technologischen Prozeßgestaltung umgangen.

## Patentansprüche

1. Verfahren zur Aufarbeitung von pyrotechnischem Material, bei dem man
I. das pyrotechnische Material in einem ersten Reaktor abbrennt und ausschwelen läßt,
II. die bei der Verbrennung entstehende Schlacke austrägt und das bei der Verbrennung entstehende Rohgas in einen Feststoffabscheider leitet, um feste Bestandteile abzutrennen,
III. das von festen Bestandteilen befreite Rohgas in einen zweiten Reaktor leitet, in welchem es auf eine Temperatur von mehr als 800°C erhitzt wird,
IV. das erhitzte Rohgas anschließend in mindestens eine Waschvorrichtung leitet,
V. das gewaschene Rohgas mit einem Additiv, das aus einer Kalk-Kohle-Mischung besteht, beaufschlagt und anschließend durch eine Filtereinheit leitet und
VI. das so gereinigte Reingas als Abluft entläßt.

2. Verfahren nach Anspruch 1,
**dadurch gekennzeichnet, daß** das pyrotechnische Material in der Stufe I. bei einer Temperatur von 250 bis 800°C abgebrannt wird.

3. Verfahren nach Anspruch 1 oder 2,
**dadurch gekennzeichnet, daß** das Rohgas in der Stufe III.auf eine Temperatur von 900 bis 2000°C erhitzt wird.

4. Verfahren nach einem der vorhergehenden Ansprüche,
**dadurch gekennzeichnet, daß** das Rohgas in der Stufe IV. schlagartig auf eine Temperatur von 60 bis 90°C abgekühlt wird.

5. Verfahren nach einem der vorhergehenden Ansprüche,
**dadurch gekennzeichnet, daß** das Rohgas in einer zweiten Waschvorrichtung nachgewaschen wird und das Waschwasser der ersten und der zweiten Waschvorrichtung in einem geschlossenen Abwasserkreislaufsystem abwasserfrei geführt wird.

6. Verfahren nach einem der vorhergehenden Ansprüche,
**dadurch gekennzeichnet, daß** das Waschwasser in der ersten Waschvorrichtung durch Zugabe einer Base auf einem pH-Wert von 7 bis 10 gehalten wird.

7. Verfahren nach einem der vorhergehenden Ansprüche,
**dadurch gekennzeichnet, daß** in der Stufe V. ein Kalk-Kohle-Gemisch mit einem Kalkanteil von 100 bis 50 Masseprozent verwendet wird und diese Kalk-Kohle-Mischung in einem Anteil von 0,1 bis 10 g/Nm³ Trockengas eingesetzt wird.
